# EUROPÄISCHE PATENTSCHRIFT

(11) **EP 3 720 328 B1**
(45) Veröffentlichungstag und Bekanntmachung des Hinweises auf die Patenterteilung: **02.02.2022**
(21) Anmeldenummer: 18829738.6
(22) Anmeldetag: 04.12.2018
(51) Int. Cl.: A47J 47/10, A24F 25/00, B65D 81/26, A23F 3/06, F24F 3/14

(54) **AUFBEWAHRUNGSEINHEIT ZUR LAGERUNG VON FEUCHTEGRADSENSIBLEN PRODUKTEN**
STORAGE UNIT FOR STORING PRODUCTS THAT CAN BE AFFECTED BY HUMIDITY
UNITÉ D'ENTREPOSAGE PERMETTANT DE STOCKER DES PRODUITS SENSIBLES À LA TENEUR EN HUMIDITÉ

(30) Priorität: 04.12.2017 AT 510012017
(43) Veröffentlichungstag der Anmeldung: 14.10.2020
(73) Patentinhaber: Pyar Ltd., London WC1A 1DG (GB)
(72) Erfinder: ERIKSSON-AHUJA, Åsa, London SW1X 9PE (GB)
(74) Vertreter: Wildhack & Jellinek
(86) Internationale Anmeldenummer: PCT/EP2018/083487
(87) Internationale Veröffentlichungsnummer: WO 2019/110587

(56) Entgegenhaltungen:
- DE-U1- 9 206 770
- FR-A- 966 606
- JP-A- S5 717 670
- US-A- 2 671 707
- US-A- 5 813 564
- "Mikken 42168 2 Large Tea Caddy/Storage Tin with Additional Aroma Inner Lid Spice Jars Diameter, Metal, Black, 8.3 x 8.3 x 8.3 cm with 2 labels 12.6 cm", www.amazon.de , 8. August 2016 (2016-08-08), XP002789149, Gefunden im Internet: URL:https://www.amazon.de/dp/B01K284PXC/re f=cm_sw_em_r_mt_dp_U_QZQBCbFEJ35GA [gefunden am 2019-02-21]

## Beschreibung

Die vorliegende Erfindung betrifft eine Aufbewahrungseinheit gemäß dem Oberbegriff des Patentanspruchs 1.

Feuchtegradsensible Produkte des Nahrungs-, Lebens- und Genussmittelsektors, wie beispielsweise Kräuter, Gewürze, Tees, Kaviar, Trüffel, Spezial-Käse, -Wurst- und -Fleischwaren aber auch Zigarren oder Tabak bedürfen einer Lagerung unter gleichbleibenden atmosphärischen Bedingungen und eines konstanten Feuchtegrads, um ihr spezifisches Aroma, ihren speziellen Geschmack, und ihre spezielle Konsistenz und Haptik über den Zeitraum der Lagerung aufrecht zu erhalten.

Aus dem Stand der Technik sind einfach aufgebaute Aufbewahrungseinheiten, wie beispielsweise Teedosen, bekannt. Nachteil bei derartigen Aufbewahrungseinheiten ist, dass diese nicht dazu geeignet sind, gleichbleibende atmosphärische Bedingungen und einen konstanten Feuchtegrad aufrechtzuerhalten, sodass feuchtegradsensible Produkte darin rasch ihre spezifischen Eigenschaften verlieren. Weiters sind Aufbewahrungseinheiten, wie z. B. Humidore für Tabake, bekannt, welche eine Konstanthaltung der Feuchte der aufbewahrten Tabaken beispielsweise mithilfe von komplexen Befeuchtungssystemen erzielen.

Eine gattungsgemäße Aufbewahrungseinheit ist beispielsweise aus Druckschrift US 2671707 A bekannt.

Aufgabe der Erfindung ist es daher, eine einfach aufgebaute und mühelos zu handhabende Aufbewahrungseinheit bereitzustellen, die den Feuchtegrad der darin aufbewahrten Produkte konstant hält, die Produkte vor in die Aufbewahrungseinheit eindringender Luft, Gerüchen und Verschmutzung schützt und gleichzeitig ein einfaches Einbringen der feuchtegradsensiblen Produkte in die Aufbewahrungseinheit ermöglicht.

Die Erfindung löst diese Aufgabe mit einer Aufbewahrungseinheit der eingangs genannten Art umfassend
- einen äußeren Behälter mit einer geschlossenen Außenwand, einer Oberseite, an der der äußere Behälter offen ist und eine Oberkante aufweist, und einer Unterseite, an der ein geschlossener Boden angeordnet ist,
- einen inneren Behälter mit einem Innenraum zur Aufnahme des feuchtegradsensiblen Produkts, einer Wandfläche mit einer Anzahl von Luftaustauschöffnungen, einer Einfüllöffnung, einer die Einfüllöffnung begrenzenden Abschlusskante und einem geschlossenen Boden,
   wobei der innere Behälter reversibel in den äußeren Behälter einsetzbar ist, wobei die Einfüllöffnung des inneren Behälters nach oben zur Oberseite des äußeren Behälters gerichtet ist und zwischen dem äußeren Behälter und dem inneren Behälter ein Zwischenraum zum Einlegen eines Feuchteregulationsmittels ausgebildet ist,
- einen reversibel abnehmbaren, auf den äußeren Behälter und den inneren Behälter aufsetzbaren und entlang der Oberkante und der Abschlusskante umfänglich umlaufenden Abdeckrahmen,
   wobei der Abdeckrahmen zur Abdeckung der zwischen dem äußeren Behälter und dem inneren Behälter ausgebildeten Öffnung des Zwischenraums ausgebildet ist und
   wobei im Abdeckrahmen eine Rahmenöffnung für den Zugang in den Innenraum vorgesehen ist,
- einen reversibel abnehmbaren, auf den Abdeckrahmen aufsetzbaren, inneren Verschlussdeckel zum Verschließen der Rahmenöffnung und
- einen abnehmbaren äußeren Verschlussdeckel zum luftdichten Verschließen des äußeren Behälters bzw. der Oberseite des äußeren Behälters.

Das schleusenartige Doppel-Deckel-System gewährleistet, dass die Aufbewahrungseinheit durch den äußeren Verschlussdeckel vor eindringender Luft, Feuchtigkeit und Gerüchen geschützt ist, während das Feuchteregulationsmittel, beispielsweise Beutel oder Päckchen gefüllt mit Trocknungsmittel, einen konstanten Feuchtegrad in der Aufbewahrungseinheit herstellt. Der innere Verschlussdeckel stellt sicher, dass die aufbewahrten Produkte wie beispielsweise Tee nicht der Umgebungsatmosphäre ausgesetzt sind, im Fall dass der äußere Verschlussdeckel unbeabsichtigterweise abgenommen wird.

Um das Feuchteregulationsmittel sicher in einer erfindungsgemäßen Aufbewahrungseinheit zu verwahren, ohne dass es für einen Benutzer beim Öffnen der Aufbewahrungseinheit sichtbar ist, kann vorgesehen sein, dass der Abdeckrahmen eine erste in den inneren Behälter eingreifende Stufe aufweist, wodurch eine erste umlaufende Auflagefläche ausgebildet ist, die auf die Abschlusskante des inneren Behälters auflegbar ist und auf den der innere Verschlussdeckel aufsetzbar ist.

Diese Ausgestaltung der Erfindung stellt weiters sicher, dass aufbewahrter Tee nicht in den Zwischenraum, in dem sich das Feuchteregulationsmittel befindet, fallen kann.

Dass der äußere Verschlussdeckel schlüssig auf der Aufbewahrungseinheit aufsitzt, kann dadurch sichergestellt werden, dass der Abdeckrahmen eine zweite in den äußeren Behälter eingreifende Stufe aufweist, wodurch eine zweite umlaufende Auflagefläche ausgebildet ist, die auf die Oberkante des äußeren Behälters auflegbar ist.

Um die Form des inneren Verschlussdeckels bestmöglich an den Abdeckrahmen anzupassen, sodass der innere Verschlussdeckel sicher auf dem Abdeckrahmen aufsitzt, im Fall, dass die Aufbewahrungseinheit kippt, kann vorgesehen sein, dass der innere Verschlussdeckel eine an die erste Auflagefläche angepasste Absenkung aufweist, sodass ein nach außen gerichteter, umfänglich umlaufender Vorsprung ausgebildet ist.

Diese Ausgestaltung des inneren Verschlussdeckels garantiert weiters, dass kein Tee aus dem inneren Behälter austreten kann, falls die Aufbewahrungseinheit kippt.

Die Möglichkeit zum platzsparenden Aufbewahren mehrerer erfindungsgemäßer Aufbewahrungseinheiten beispielsweise durch Stapeln wird bereitgestellt, indem der äußere Verschlussdeckel eine die Oberseite des äußeren Behälters verschließende Verschlussfläche und eine umfänglich verlaufende Umbiegungsfläche aufweist, wobei der äußere Verschlussdeckel auf den äußeren Behälter derart aufsetzbar ist, dass der obere Randbereich der Außenwand des äußeren Behälters von der Umbiegungsfläche umschlossen ist, und wobei vorzugsweise die Verschlussfläche und die Umbiegungsfläche eben ausgebildet sind.

Zum luft- und gegebenenfalls wasserdichten Verschließen der Aufbewahrungseinheit kann vorgesehen sein, dass der äußere Verschlussdeckel an der dem Innenraum zugewandten Seite der Umbiegungsfläche eine umfänglich an den Abdeckrahmen und den äußeren Behälter anlegbare erste Dichtung aufweist, und gegebenenfalls eine zweite Dichtung an der dem Innenraum zugewandten Seite der Verschlussfläche angeordnet ist.

Zur dauerhaften Fixierung und zum Schutz der an der Verschlussfläche des äußeren Verschlussdeckels angeordneten zweiten Dichtung kann vorgesehen sein, dass an einer dem Innenraum zugewandten Seite der zweiten Dichtung ein die zweite Dichtung zumindest abschnittsweise abdeckendes Deckelement angeordnet ist.

Die dauerhafte Fixierung der zweiten Dichtung an der Verschlussfläche kann gewährleistet werden, wenn das Deckelement eine Vertiefung aufweist und dass die zweite Dichtung eine damit korrespondierende Dichtungsausnehmung aufweist, wobei die Grundfläche der Dichtungsausnehmung der Grundfläche der Vertiefung entspricht, sodass das Deckelement im Bereich der Dichtungsausnehmung mit dem äußeren Verschlussdeckel berührend anordenbar ist.

Dass sich das Deckelement nicht unerwünschterweise aus dem äußeren Verschlussdeckel lösen kann, kann verhindert werden, wenn am Deckelement ein umfänglich umlaufender Bördelrand vorgesehen ist, wobei der Bördelrand bei Aufsetzen des Deckelements auf die an der Verschlussfläche angeordnete zweite Dichtung zur Fixierung des Deckelements gegen die erste Dichtung und die Umbiegungsfläche des äußeren Verschlussdeckels verspreizbar ist.

Zur besonders flexiblen Ausgestaltung einer erfindungsgemäßen Aufbewahrungseinheit sodass sie an die Bedürfnisse eines Benutzers für eine problemlose Aufbewahrung in Schränken, Schubladen kann vorgesehen sein, dass der äußere Behälter und der äußere Verschlussdeckel und die zweite Dichtung und das Abdeckelement und ein auf dem äußeren Behälter aufsitzender Anteil des Abdeckrahmens einen rechteckigen oder quadratischen oder kreisförmigen oder elliptischen Querschnitt aufweisen.

Um eine erfindungsgemäße Aufbewahrungseinheit für die Aufbewahrung von Produkten unterschiedlicher Größe und/oder Form auszugestalten, kann vorgesehen sein, dass der innere Behälter und/oder der innere Verschlussdeckel und/oder ein auf dem inneren Behälter aufsitzender Anteil des Abdeckrahmens einen rechteckigen oder quadratischen oder kreisförmigen oder elliptischen Querschnitt aufweisen.

Ein besonders einfaches Einsetzen und Entnehmen des inneren Behälters zur Aufbewahrung von feuchtegradsensiblen Produkten in die bzw. aus der Aufbewahrungseinheit bei gleichzeitig hoher Konstanz der Gesamt-Atmosphären-Feuchte kann dadurch gewährleistet werden, wenn der äußere Behälter und/oder der innere Behälter quaderförmig oder zylindrisch ausgebildet sind.

Um in der Aufbewahrungseinheit eine konstante Binnenatmosphäre herzustellen, kann vorgesehen sein, dass die Luftaustauschöffnungen zum Atmosphärenaustausch zwischen dem Innenraum und dem Zwischenraum ausgebildet sind, sodass im Innenraum und im Zwischenraum eine einheitliche Binnenatmosphäre mit einem bestimmten Feuchtegrad einstellbar ist.

Durch diese Ausgestaltung der Luftaustauschöffnungen kann ein Atmosphärenaustausch zwischen dem Innenraum, in dem sich der Tee befindet, und dem Zwischenraum, in dem das Feuchteregulationsmittel aufbewahrt ist, stattfinden. Dadurch stellt sich im Innenraum und im Zwischenraum ein einheitlicher Feuchtegrad ein.

Eine weitere Ausführungsform der Erfindung, die eine Möglichkeit zum Einsatz von Mikroperforationen als Alternative zu den Luftaustauschöffnungen bietet, kann bereitgestellt werden, wenn der innere Behälter zumindest eine Ausnehmung mit einem die Ausnehmung bedeckenden perforierten Schichtelement, in dem die Luftaustauschöffnungen angeordnet sind, aufweist.

Durch die vorgesehenen perforierten Schichtelemente können selbst kleinste Fragmente der aufbewahrten Teeblätter nicht in den Zwischenraum vordringen, während ein effizienter Atmosphärenaustausch zwischen dem Innenraum und dem Zwischenraum gewährleistet ist.

Um die perforierten Schichtelemente dauerhaft und stabil am inneren Behälter anbringen zu können, kann vorgesehen sein, dass der innere Behälter durch eine Rahmenkonstruktion gebildet ist, wobei der innere Behälter an jeder seiner Seitenflächen Ausnehmungen aufweist, an denen perforierte Schichtelemente angeordnet sind.

Besonders feine Perforationen können für den Luftaustausch zwischen dem Innenraum und dem Zwischenraum ausgenutzt werden, wenn die perforierten Schichtelemente aus einer Stahllegierung bestehen.

Eine besonders korrosionsbeständige und gleichzeitig leichte Ausgestaltung der Aufbewahrungseinheit kann gewährleistet werden, wenn der äußere Behälter und/oder der äußere Verschlussdeckel und/oder gegebenenfalls die Wandfläche des inneren Behälters und/oder der innere Verschlussdeckel aus einem Weißblech oder Zinnblech bestehen.

Um den inneren Behälter beim Einsetzen in den äußeren Behälter zu fixieren, kann vorgesehen sein, dass im Boden des äußeren Behälters und/oder im Boden des inneren Behälters, insbesondere mechanische, Verbindungsmittel zur Herstellung einer reversibel lösbaren Wirkverbindung zwischen dem äußeren Behälter und dem inneren Behälter vorgesehen sind, wobei vorzugsweise die Verbindungsmittel zentrisch mittig angeordnet sind.

Eine besonders stabile Wirkverbindung zwischen dem inneren Behälter und dem äußeren Behälter kann ausgebildet werden, wenn im Boden des äußeren Behälters eine erste Vertiefung vorgesehen ist und im Boden des inneren Behälters eine mit der ersten Vertiefung korrespondierende zweite Vertiefung vorgesehen ist, sodass eine mechanische Wirkverbindung herstellbar ist.

Um den inneren Behälter besonders sicher in Position zu halten, kann vorgesehen sein, dass die erste Vertiefung und die zweite Vertiefung sphärisch, ellipsoidal oder quaderförmig ausgestaltet sind, wobei insbesondere eine erste Hinterschneidung in der ersten Vertiefung und eine damit korrespondierende zweite Hinterschneidung in der zweiten Vertiefung vorgesehen sind, sodass der innere Behälter durch Aufsetzen auf den äußeren Behälter im äußeren Behälter arretierbar ist.

Um dem zwischen dem äußeren Behälter und dem inneren Behälter ausgebildeten Zwischenraum eine konstante Breite zu verleihen, kann vorgesehen sein, dass die Vertiefungswandflächen der ersten Vertiefung und der zweiten Vertiefung parallel zur den Außenwandflächen des äußeren Behälters ausrichtbar sind.

Das Anbringen von Hinterschneidungen, um den inneren Behälter im äußeren Behälter zu arretieren und die parallele Ausrichtung der Vertiefungswandflächen mit den Außenwandflächen des äußeren Behälters bieten den weiteren Vorteil, dass das Feuchteregulationsmittel bzw. Päckchen mit Trocknungsmittel nicht entlang der Wände des äußeren Behälters rutschen und leicht über die der Oberseite zugewandte Öffnung des Zwischenraums auszutauschen sind.

Ein einfaches Abnehmen des inneren Verschlussdeckels kann sichergestellt werden, wenn an einer vom Innenraum abgewandten Seite des inneren Verschlussdeckels ein Griff vorgesehen ist.

Eine besonders Aufbewahrungseinheit, die besonders einfach zu greifen und zu stapeln ist, kann bereitgestellt werden, wenn der äußere Behälter und der innere Behälter kreiszylindrisch ausgebildet sind, der äußere Verschlussdeckel und ein auf dem äußeren Behälter aufsitzender Anteil des Abdeckrahmens einen kreisförmigen Querschnitt aufweisen und der innere Verschlussdeckel und ein auf dem inneren Behälter aufsitzender Anteil des Abdeckrahmens einen kreisförmigen Querschnitt aufweisen.

Ein besonders effektiver Atmosphärenaustausch zwischen dem Innenraum und dem Zwischenraum kann erzielt werden, wenn die Wandfläche des inneren Behälters aus einem perforierten Wandelement gebildet ist, wobei das perforierte Wandelement eine Vielzahl von Luftaustauschöffnungen aufweist.

Weitere Vorteile und Ausgestaltungen der Erfindung ergeben sich aus der Beschreibung und den beiliegenden Zeichnungen.

Besonders vorteilhafte, aber nicht einschränkend zu verstehende, Ausführungsbeispiele der Erfindung werden im Folgenden anhand der beiliegenden Zeichnungen schematisch dargestellt und unter Bezugnahme auf die Zeichnungen beispielhaft beschrieben:

Im Folgenden zeigen schematisch:
- Fig. 1: eine Explosionszeichnung eines ersten Ausführungsbeispiels der Erfindung.
- Fig. 2: eine Schrägansicht des ersten Ausführungsbeispiels.
- Fig. 3: eine Schnittdarstellung durch das erste Ausführungsbeispiel.
- Fig. 3a: eine Detailansicht des ersten Ausführungsbeispiels.
- Fig. 3b: eine Ansicht in Richtung des Bodens des äußeren Behälters.
- Fig. 3c: eine Aufsicht auf den äußeren Verschlussdeckel.
- Fig. 4: eine zweite Explosionszeichnung des ersten Ausführungsbeispiels.
- Fig. 4a: eine weitere Detailansicht des ersten Ausführungsbeispiels.
- Fig. 5: eine dritte Explosionszeichnung des ersten Ausführungsbeispiels.
- Fig. 6: eine Schnittdarstellung durch ein zweites Ausführungsbeispiel.
- Fig. 6a: eine Ansicht in Richtung des Bodens des äußeren Behälters des zweiten Ausführungsbeispiels.
- Fig. 6b: eine Aufsicht auf den äußeren Verschlussdeckel des zweiten Ausführungsbeispiels.
- Fig. 7: eine erste Explosionszeichnung des zweiten Ausführungsbeispiels.
- Fig. 8: eine zweite Explosionszeichnung des zweiten Ausführungsbeispiels.
- Fig. 9: eine Detailansicht eines perforierten Wandelements.

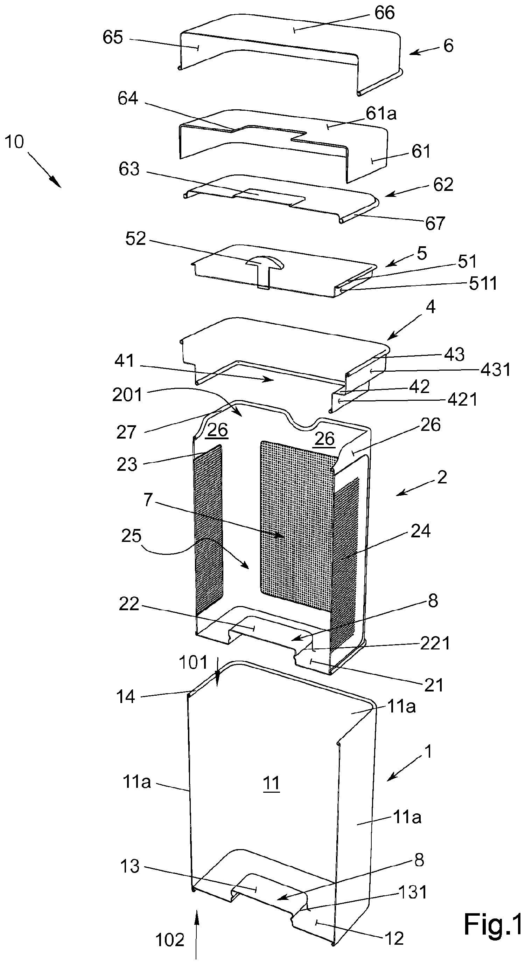

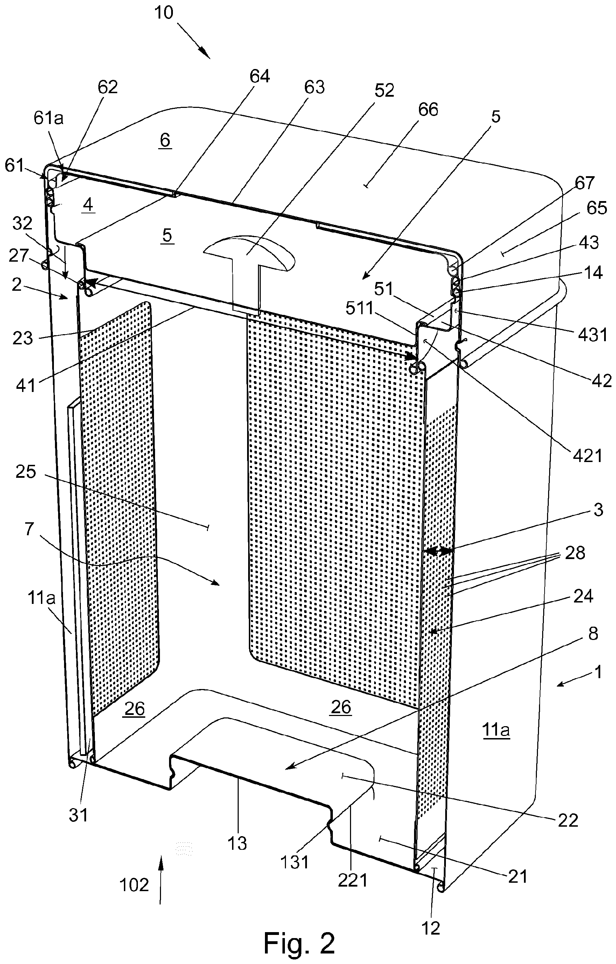

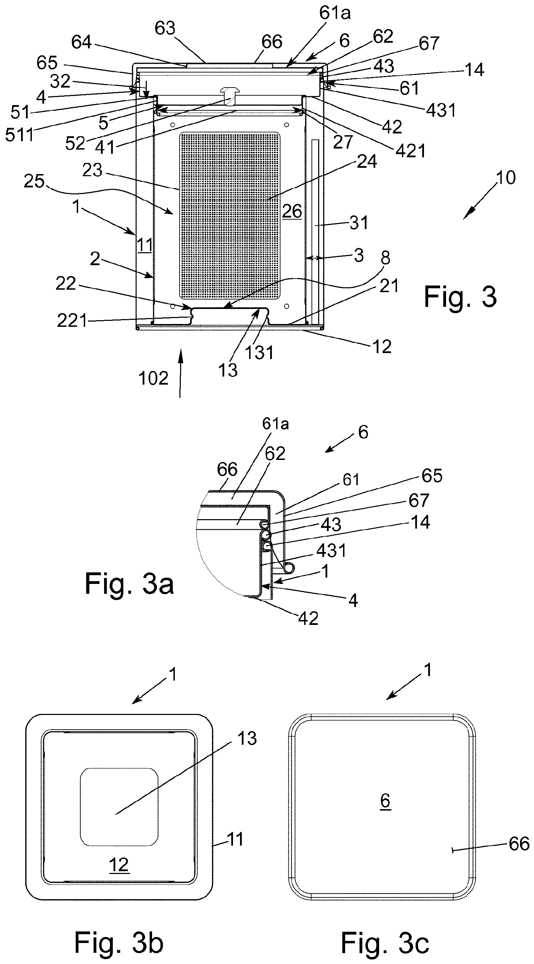

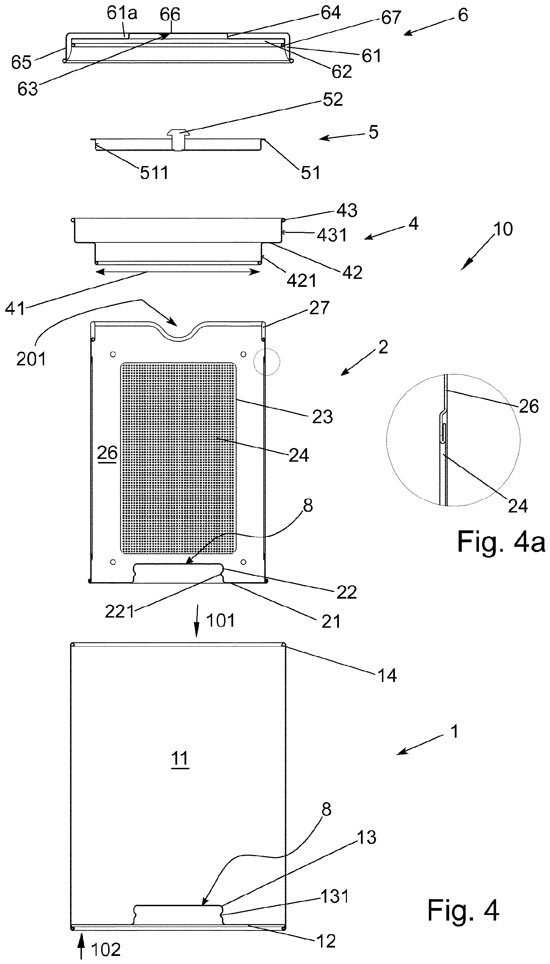

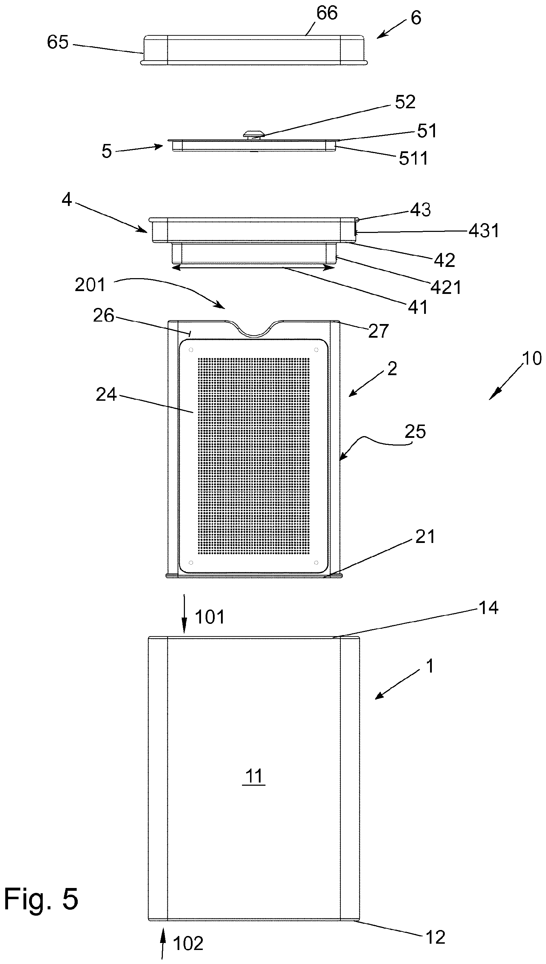

Fig. 1, Fig. 2, Fig. 3, Fig. 4 und Fig. 5 zeigen perspektivische Ansichten einer ersten Ausführungsform einer Aufbewahrungseinheit 10. Fig. 1 zeigt dabei eine Schnittdarstellung durch eine erste Ausführungsform der Erfindung als Explosionszeichnung, Fig. 2 eine Schnittdarstellung durch das erste Ausführungsbeispiel der Erfindung in zusammengesetztem Zustand in Form einer perspektivischen Ansicht, Fig. 3 einen Aufriss der ersten Ausführungsform der Erfindung in zusammengesetztem Zustand, Fig. 4 eine Schnittdarstellung durch die erste Ausführungsform der Erfindung in Form einer Explosionszeichnung, und Fig. 5 eine Außenansicht der ersten Ausführungsform der Erfindung in Form einer Explosionsdarstellung.

Im ersten Ausführungsbeispiel in Fig. 1, Fig. 2, Fig. 3, Fig. 4 und Fig. 5 weist die erfindungsgemäße Aufbewahrungseinheit 10 einen äußeren Behälter 1, einen inneren Behälter 2, einen Abdeckrahmen 4, einen inneren Verschlussdeckel 5 und einen äußeren Verschlussdeckel 6 auf. Der äußere Behälter 1 weist eine geschlossene Außenwand 11, eine, im üblichen Betrieb nach oben weisende, Oberseite 101 und eine, im üblichen Betrieb nach unten weisende, Unterseite 102 auf. An der Oberseite 101 ist der äußere Behälter 1 offen und weist eine Oberkante 14 auf. An der Unterseite 102 ist ein geschlossener Boden 12 am äußeren Behälter 1 angeordnet.

Im gezeigten ersten Ausführungsbeispiel weist der äußere Behälter 1 eine quadratische Querschnittsfläche auf, sodass die Außenwand 11 des äußeren Behälters 1 vier Außenwandflächen 11a umfasst. Die Oberkante 14 ist im ersten Ausführungsbeispiel als ins Innere des äußeren Behälters 1 gewandter Bördelrand ausgebildet; alternativ kann der Bördelrand auch nach außen gerichtet sein. Alternativ kann die Oberkante 14 auch als einfach ausgestaltete Abschlusskante ohne Zierelemente oder Bördelrand ausgestaltet sein.

Der innere Behälter 2 weist einen Innenraum 7 zur Aufnahme eines feuchtegradsensiblen Produkts, beispielsweise von Tee, auf. Der innere Behälter weist im ersten Ausführungsbeispiel weiters eine Wandfläche 25 mit einer Anzahl von Luftaustauschöffnungen 28 auf und hat einen geschlossenen Boden 21. Die Luftaustauschöffnungen 28 sind in Fig. 2 im Detail ersichtlich und in Fig. 1, Fig. 3, Fig. 4 und Fig. 5 als schwarze Punkte dargestellt. Die Luftaustauschöffnungen 28 sind zum Atmosphärenaustausch zwischen dem Innenraum 7 und dem Zwischenraum 3 ausgebildet, sodass im Innenraum 7 und im Zwischenraum 3 eine einheitliche Binnenatmosphäre mit einem bestimmten Feuchtegrad einstellbar ist.

Dem geschlossenen Boden 21 des inneren Behälters 2 ist eine Einfüllöffnung 201 gegenüberliegend angeordnet, wobei die Einfüllöffnung 201 von einer Abschlusskante 27 begrenzt wird. Im ersten Ausführungsbeispiel besitzt der innere Behälter 2 eine quadratische Querschnittsfläche, sodass die Wandfläche 25 in vier Seitenflächen 26 unterteilt ist. Jede der Seitenflächen 26 des inneren Behälters 2 weist eine Ausnehmung 23 auf, an der perforierte Schichtelemente 24 angeordnet sind, wobei der innere Behälter 2 als eine Rahmenkonstruktion ausgebildet ist.

Im ersten Ausführungsbeispiel bestehen die perforierten Schichtelemente 24 aus einer Stahllegierung und weisen eine große Anzahl an Luftaustauschöffnungen 28 auf und die Rahmenkonstruktion des inneren Behälters 2 und der äußere Behälter 1 sind aus einem Weißblech hergestellt.

Der innere Behälter 2 ist reversibel in den äußeren Behälter 1 einsetzbar, sodass die Oberseite 101 des äußeren Behälters 1 und die Einfüllöffnung 201 des inneren Behälters 2 derart zueinander angeordnet sind, dass feuchtegradsensible Produkte in den Innenraum 7 einfüllbar sind. Bei dieser Anordnung des äußeren Behälters 1 und des inneren Behälters 2 ist zwischen dem äußeren Behälter 1 und dem inneren Behälter 2 ein Zwischenraum 3 zum Einlegen eines Feuchteregulationsmittels 31 ausgebildet.

Im ersten Ausführungsbeispiel sind im Boden 12 des äußeren Behälters 1 und im Boden 21 des inneren Behälters 2 Verbindungsmittel 8 zur Herstellung einer reversibel lösbaren Wirkverbindung zwischen dem äußeren Behälter 1 und dem inneren Behälter 2 vorgesehen. Die Verbindungsmittel 8 sind dabei zentrisch mittig im Boden 12 des äußeren Behälters 1 und im Boden 21 des inneren Behälters 2 angeordnet und als mechanische Verbindungsmittel ausgebildet.

Im Boden 12 des äußeren Behälters 1 ist dabei eine erste Vertiefung 13 vorgesehen, die quaderförmig ausgebildet ist und eine erste Hinterschneidung 131 aufweist. Die erste Vertiefung 13 ist dabei nach innen, d.h. von der Unterseite 102 des äußeren Behälters 1 in Richtung der Oberseite 101 gewandt, ausgebildet. Im Boden 21 des inneren Behälters 2 ist eine zweite Vertiefung 22 ausgebildet, welche wie die erste Vertiefung 13 des äußeren Behälters 1 quaderförmig ausgebildet ist und mit dieser korrespondiert, was in Fig. 1 und Fig. 4 ersichtlich ist.

In der zweiten Vertiefung 22 ist eine zweite Hinterschneidung 221 vorgesehen, welche mit der ersten Hinterschneidung 131 der ersten Vertiefung 13 korrespondiert, sodass der innere Behälter 2 durch Aufsetzen auf den äußeren Behälter 1 im äußeren Behälter 1 arretierbar ist und eine mechanische Wirkverbindung herstellbar ist. Dadurch ist eine besonders gute Fixierung des inneren Behälters 2 im äußeren Behälter 1 gewährleistet. Alternativ können die erste Vertiefung 13 und die zweite Vertiefung 22 auch ohne Hinterschneidung ausgebildet sein oder eine ellipsoidale oder sphärische Grundfläche aufweisen.

Im ersten Ausführungsbeispiel weisen die erste Vertiefung 13 und die zweite Vertiefung 22 weiters glatte Vertiefungswandflächen auf, die gewährleisten, dass die Außenwandflächen 11a des äußeren Behälters 1 parallel zu den Seitenflächen 26 des inneren Behälters 2 ausrichtbar sind, wie in Fig. 2 ersichtlich ist.

Die Aufbewahrungseinheit 10 umfasst weiters einen reversibel abnehmbaren und auf den äußeren Behälter 1 und den inneren Behälter 2 aufsetzbaren Abdeckrahmen 4. Der Abdeckrahmen 4 verläuft umfänglich entlang des äußeren Behälters 1 und des inneren Behälters 2 und ist zur Abdeckung der zwischen dem äußeren Behälter 1 und dem inneren Behälter 2 ausgebildeten Öffnung 32 des Zwischenraums 3 ausgebildet.

Im Abdeckrahmen 4 ist eine Rahmenöffnung 41 für den Zugang in den Innenraum 7 vorgesehen, welche die Einfüllöffnung 201 des inneren Behälters 2 frei lässt, sodass beispielsweise Tee in den Innenraum 7 des inneren Behälters 2 eingefüllt werden kann.

Der Abdeckrahmen 4 ist dabei doppelt stufenförmig ausgebildet und weist eine erste, in den inneren Behälter 2 eingreifende, Stufe 421 auf, wodurch eine erste umlaufende Auflagefläche 42 ausgebildet ist. Die Auflagefläche 42 ist auf die Abschlusskante 27 des inneren Behälters 2 auflegbar. Der Abdeckrahmen 4 umfasst weiters eine zweite, in den äußeren Behälter 2 eingreifende Stufe 431 auf, wodurch eine zweite umlaufende Auflagefläche 43 ausgebildet ist. Die zweite Auflagefläche 43 ist auf die Oberkante 14 des äußeren Behälters 1 auflegbar.

Durch die Anordnung eines inneren Behälters 2 mit perforierten Schichtelementen 24, in denen Luftaustauschöffnungen 28 vorgesehen sind, in einem äußeren Behälter 1, ist gewährleistet, dass die feuchtegradsensiblen Produkte im Innenraum 7 des inneren Behälters 2 sicher verwahrt sind, ohne dass ein Kontakt mit dem Feuchteregulationsmittel 31 im Zwischenraum 3 oder dem äußeren Behälter 1 möglich ist.

Durch die Luftaustauschöffnungen 28 ist ein Ausgleich von Luft und Feuchtigkeit zwischen dem inneren Behälter 1 und dem Zwischenraum 3 mit dem Feuchteregulationsmittel 31 gewährleistet. Dadurch ist eine einheitliche Binnenatmosphäre und ein bestimmter Feuchtegrad im Innenraum 7 einstellbar, der eine adäquate Lagerung der feuchtegradsensiblen Produkte, insbesondere des Tees, ermöglicht. Die Luftaustauschöffnungen 28 sind dabei so klein gewählt, dass keine Bestandteile des Tees in den äußeren Behälter 1 bzw. in den Zwischenraum 3 gelangen können oder, dass Feuchteregulationsmittel 31 in den Innenraum 7 gelangen kann, wenn ein granulares Feuchteregeulationsmittel 31 verwendet wird.

Der Abdeckrahmen 4 gewährleistet, dass beim Befüllen des inneren Behälters 2 mit Tee bzw. dem Entnehmen des Tees aus dem Innenraum 7 keine Bestandteile des Tees in den Zwischenraum 3 bzw. in den äußeren Behälter 1 fallen können. Der Abdeckrahmen 4 stellt weiters sicher, dass das Feuchteregulationsmittel 31 ausgetauscht werden kann, ohne dass der Tee im Innenraum 7 des inneren Behälters 2 entfernt oder berührt werden muss.

Im Zwischenraum 3 der Aufbewahrungseinheit 10 finden, wie in Fig. 2 und Fig. 3 gezeigt, bis zu vier Beutel mit Feuchteregulationsmittel 31 entlang der Wandflächen 11a bzw. der Seitenflächen 26 Platz. Dadurch ist beispielsweise der gewünschte Feuchtegrad durch Variation der Anzahl an Beuteln mit Feuchteregulationsmittel 31 einstellbar und eine einheitliche Binnenatmosphäre ist über einen längeren Zeitraum gewährleistet. Alternativ kann auch beispielsweise granulares Feuchteregulationsmittel 31 in den Zwischenraum 3 gefüllt werden.

Im ersten Ausführungsbeispiel umfasst die Aufbewahrungseinheit 10 weiters einen reversibel abnehmbaren, auf den Abdeckrahmen 4 aufsetzbaren, inneren Verschlussdeckel 5. Der Verschlussdeckel 5 dient zum Verschließen der Rahmenöffnung 41 bzw. der Einfüllöffnung 201 des inneren Behälters 2, sodass kein Tee aus dem Innenraum 7 des inneren Behälters 2 fallen kann und auch keine Verunreinigungen in den Tee gelangen können.

Der innere Verschlussdeckel 5 ist dabei auf die erste Auflagefläche 42 des Abdeckrahmens 4 aufsetzbar und weist eine an die erste Auflage 42 angepasste Absenkung 511 auf, sodass ein nach außen gerichteter, umfänglich umlaufender Vorsprung 51 ausgebildet ist. Der Vorsprung 51 gewährleistet, dass der innere Verschlussdeckel 5 am Abdeckrahmen 4 fixierbar ist, sodass beispielsweise beim Kippen der Aufbewahrungseinheit 10 der innere Verschlussdeckel 5 nicht unerwünschter Weise abfallen kann. Der innere Verschlussdeckel 5 weist weiters an seiner vom Innenraum 7 abgewandten Seite einen Griff 52 auf, wodurch der innere Verschlussdeckel 5 leicht greifbar und vom Abdeckrahmen 4 abnehmbar ist.

Im ersten Ausführungsbeispiel umfasst die Aufbewahrungseinheit 10 weiters einen abnehmbaren, äußeren Verschlussdeckel 6 zum Verschließen des äußeren Behälters 1 bzw. der Oberseite 101 des äußeren Behälters 1. Der äußere Verschlussdeckel 6 verschließt den äußeren Behälter 1 luft- und gegebenenfalls wasserdicht, sodass keine Luftfeuchtigkeit oder Gerüche in die Aufbewahrungseinheit 10 eindringen und die aufbewahrten feuchtegradsenbsiblen Produkte, bzw. den Tee, schädigen können.

Durch das Anordnen eines inneren Verschlussdeckels 5 und zusätzlich eines äußeren Verschlussdeckels 6 ist weiters sichergestellt, dass, sollte der äußere Verschlussdeckel 6 unbeabsichtigter Weise von der Aufbewahrungseinheit 10 abgezogen werden, der innere Verschlussdeckel 5 den im Innenraum 7 befindlichen Tee immer noch vor Verschmutzungen, und gegebenenfalls Luft und Feuchtigkeit schützt.

Der äußere Verschlussdeckel 6 weist im ersten Ausführungsbeispiel eine die Oberseite 101 des äußeren Behälters 1 verschließende Verschlussfläche 66 und eine umfänglich umlaufende Umbiegungsfläche 65 auf, die außen an der Verschlussfläche 66 angeordnet und annähernd rechtwinkelig nach unten gebogen ist. Die Verschlussfläche 66 und die Umbiegungsfläche 65 des äußeren Verschlussdeckels 6 sind im ersten Ausführungsbeispiel eben ausgebildet und beim Aufsetzen des äußeren Verschlussdeckels 6 auf den äußeren Behälter 1 umschließt die Umbiegungsfläche 65 den oberen Randbereich der Außenwand 11 des äußeren Behälters 1, was in Fig. 2 und Fig. 3 dargestellt ist.

Der äußere Verschlussdeckel 6 ist im ersten Ausführungsbeispiel besonders luft- und gegebenenfalls wasserdicht ausgestaltet, indem eine erste Dichtung 61 auf der dem Innenraum 7 zugewandten Seite der Umbiegungsfläche 65 angeordnet ist. Die erste Dichtung 61 ist umfänglich an den Abdeckrahmen 4 und den äußeren Behälter 1 anlegbar, d.h. dass die erste Dichtung 61 beim Aufsetzen des äußeren Verschlussdeckels 6 den äußeren Behälter 1 und den über den ersten Behälter 1 ragenden Teil des Abdeckrahmens 4 umschließt. Dadurch können von außen keine Gerüche bzw. Luftfeuchtigkeit in die Aufbewahrungseinheit 10 bzw. in den äußeren Behälter 1 eindringen.

Weiters ist zur besonders luft- und gegebenenfalls wasserdichten Ausgestaltung des äußeren Verschlussdeckels 6 eine zweite Dichtung 61a an der dem Innenraum zugewandten Seite der Verschlussfläche 61 angeordnet, wie in Fig. 1 zu sehen ist.

Die Aufbewahrungseinheit 10 umfasst im ersten Ausführungsbeispiel weiters ein Deckelement 62, das an einer dem Innenraum 7 zugewandten Seite der zweiten Dichtung 61a angeordnet ist und die zweite Dichtung 61a zumindest abschnittsweise abdeckt. Im Ausführungsbeispiel ist die zweite Dichtung 61a durch das Deckelement 62 vollständig abgedeckt, wobei das Deckelement 62 eine Vertiefung 63 aufweist.

Die Vertiefung 63 ist, wie in Fig. 1 gezeigt, im ersten Ausführungsbeispiel quadratisch ausgebildet und zentrisch mittig im Deckelement 62 angeordnet, und die zweite Dichtung 61 weist eine mit der Vertiefung 63 korrespondierende Dichtungsausnehmung 64 auf. Das Deckelement 62 dient dabei zur Fixierung der ersten Dichtung 61 bzw. der zweiten Dichtung 61a im äußeren Verschlussdeckel 6.

Die Grundfläche der Dichtungsausnehmung 64 entspricht der Grundfläche der Vertiefung 63, sodass das Deckelement 62 im Bereich der Dichtungsausnehmung 64 mit dem äußeren Verschlussdeckel 6 berührend anordenbar ist. Um die erste Dichtung 61 und die zweite Dichtung 61a besonders dauerhaft im äußeren Verschlussdeckel 6 zu fixieren, ist im ersten Ausführungsbeispiel ein Klebstoff auf der Vertiefung 63 des Deckelements 62 aufgetragen, sodass das Deckelement 62 am äußeren Verschlussdeckel 6 dauerhaft befestigt ist. Somit ist auch ein Verrutschen bzw. Herausfallen der ersten Dichtung 61 und der zweiten Dichtung 61a aus dem äußeren Verschlussdeckel 6 unterbunden.

Zusätzlich weist das Deckelement 62 im ersten Ausführungsbeispiel einen umfänglich umlaufenden Bördelrand 67 auf, welcher sich beim Aufsetzen des Deckelements 62 auf die an der Verschlussfläche 66 angeordnete zweite Dichtung 61a zur Fixierung des Deckelements 62 gegen die erste Dichtung 61 und die Umbiegungsfläche 65 des äußeren Verschlussdeckels 6 verspreizt. Der Bördelrand 67 ist im ersten Ausführungsbeispiel in Richtung des äußeren Verschlussdeckels 6 gekrümmt, was ein besonders einfaches Verspreizen gewährleistet.

Alternativ kann das Deckelement 62 auch ohne Verklebung, nur mit Hilfe des Bördelrands 67 gegen die erste Dichtung 61 im äußeren Verschlussdeckel 6 verspreizt werden, wodurch ebenfalls eine ausreichende Fixierung der ersten Dichtung 61 und der zweiten Dichtung 61a im äußeren Verschlussdeckel 6 gewährleistet ist.

Optional kann das Deckelement 62 auch ohne Vertiefung 63 ausgestaltet sein, wobei die erste Dichtung 61a in diesem Fall keine mit der Vertiefung 63a korrespondierende Dichtungsausnehmung 64 aufweist.

Alternativ kann das Deckelement 62 auch die erste Dichtung 61 und die zweite Dichtung 61a vollständig bedecken und sich im unteren, von der Verschlussfläche 66 entfernten, Bereich der Umbiegungsfläche 65 des äußeren Verschlussdeckels 6 mit einem in Richtung des Verschlussdeckels 6 gewölbten Bördelrand 67 verspreizen.

In Fig. 2 ist beispielhaft die Anordnung eines Beutels mit Feuchteregulationsmittel im Zwischenraum 3 dargestellt. Weiters zeigt Fig. 2, dass an den Ausnehmungen 23 der Seitenflächen 26 Schichtelemente 24 mit Luftaustauschöffnungen 28 in Form von Mikroperforationen angeordnet sind, die fein genug sind, um selbst kleinste Teebestandteile im Innenraum 7 zurückzuhalten, sodass diese nicht in den Zwischenraum 3 zum Feuchteregulationsmittel 31 gelangen können. Ein Austausch von Luft und Feuchtigkeit zwischen dem Innenraum 7 und dem Zwischenraum 3 mit dem Feuchteregulationsmittel 31 ist jedoch problemlos möglich.

Im gezeigten Ausführungsbeispiel sind in allen Seitenflächen 26 des inneren Behälters 2 Ausnehmungen 23 vorhanden und perforierte Schichtelemente 24, die die Ausnehmungen 23 verschließen, angeordnet, wodurch ein optimaler Atmosphärenaustausch zwischen dem Innenraum 7 und dem Zwischenraum 31 gewährleistet ist. Alternativ können beispielsweise nur zwei Seitenflächen 26 Ausnehmungen 23 mit perforierten Schichtelementen 24 angeordnet sein, oder Luftaustauschöffnungen 28 direkt in der Wandfläche 25 des inneren Behälters 2 angeordnet sein.

Die perforierten Schichtelemente 24 bestehen dabei aus einer Stahllegierung, die das Herstellen von Mikroperforationen problemlos ermöglicht. Der äußere Behälter 1 und die Wandfläche 25 des inneren Behälters 2 bestehen im ersten Ausführungsbeispiel aus einem Weißblech. Der äußere Verschlussdeckel 6 und/oder der innere Verschlussdeckel 5 bestehen ebenfalls aus einem Weißblech oder Zinnblech.

Fig. 2 zeigt weiters, dass der Abdeckrahmen 4 in zusammengesetztem Zustand der Aufbewahrungseinheit 10 die zwischen dem äußeren Behälter 1 und dem inneren Behälter 2 ausgebildete Öffnung 32 des Zwischenraums 3 vollständig abdeckt. Dadurch sind für einen Benutzer der Aufbewahrungseinheit 10 beispielsweise die Beutel mit Feuchteregulationsmittel 31 nicht ersichtlich, wenn er Tee in den Innenraum 7 des inneren Behälters 2 füllt oder Tee aus diesem entnimmt. Der Abdeckrahmen 4 muss beispielsweise nur abgenommen werden, um das Feuchteregulationsmittel 31 aus dem Zwischenraum 3 zu entnehmen bzw. um das Feuchteregulationsmittel 31 zu tauschen.

Weiters können keine Teeblätter beim Einfüllen bzw. Entnehmen des Tees in den Innenraum 7 des inneren Behälters 2 in den Zwischenraum 3 fallen. Der Abdeckrahmen 4 reduziert weiters die Oberfläche, über die schädliche Feuchtigkeit, Luft, Licht oder Gerüche in den äußeren Behälter 1 und den inneren Behälter 2, worin sich der Tee befindet, eindringen können. Gleichzeitig wird dadurch die Lebensdauer des Feuchteregulationsmittels 31 erhöht.

Fig. 2 zeigt weiters, wie die erste Vertiefung 13 und die zweite Vertiefung 22 ineinander greifen, um den inneren Behälter 2 im äußeren Behälter 1 zu zentrieren und zu arretieren. Somit ist ein Rotieren des inneren Behälters 2 im äußeren Behälter 1 nicht möglich und beispielsweise Beutel mit Feuchteregulationsmittel 31 sind in einem gleichbleibend breiten Zwischenraum 3 untergebracht, sodass das Feuchteregulationsmittel 31 einfach eingesetzt und entnommen werden kann.

Die Verschlussfläche 66 des äußeren Verschlussdeckels 6 und der Boden 12 des äußeren Behälters 1 sind eben ausgebildet, sodass problemlos mehrere erfindungsgemäße Aufbewahrungseinheiten 10 übereinandergestapelt werden können. Am Boden 12 des äußeren Behälters 1 kann dabei ein außen am Boden 12 des äußeren Behälters 1 umfänglich umlaufender Bördelrand vorgesehen sein, der beim Stapeln von Aufbewahrungseinheiten 10 sicherstellt, dass jeweils der Boden 12 eines äußeren Behälters 1 einer Aufbewahrungseinheit 10 sicher auf dem äußeren Verschlussdeckel 6 einer darunter angeordneten weiteren Aufbewahrungseinheit 10 fixiert ist. Weiters ist in Fig. 2 ersichtlich, dass der Griff 52 des inneren Verschlussdeckels 5 das Deckelement 62 nicht berührt, sodass das Deckelement 62 und die zweite Dichtung 61a nicht unerwünschter Weise durch den Griff 52 beschädigt bzw. vom Verschlussdeckel 6 abgezogen werden.

Fig. 3a zeigt eine Detailaufnahme im Bereich des äußeren Verschlussdeckels 6 und der Oberkante 14 des äußeren Behälters 1 des ersten Ausführungsbeispiels der Erfindung. In Fig. 3a ist ersichtlich, dass die zweite Dichtung 61a die Verschlussfläche 66 des äußeren Verschlussdeckels 6 vollständig bedeckt, und dass die Umbiegungsfläche 65 des äußeren Verschlussdeckels 6 von der ersten Dichtung 61 vollständig bedeckt ist.

Die erste Dichtung 61 läuft dabei nach unten, d.h. in die von der Verschlussfläche 66 abgewandte Richtung des äußeren Verschlussdeckels 6, keilförmig zu. Der Bördelrand 67 des Deckelements 62 verspreizt sich gegen die erste Dichtung 61 und die zweite Auflagefläche 43 des Abdeckrahmens 4, welche im Ausführungsbeispiel als Bördelrand ausgebildet ist, verspreizt sich ebenfalls gegen die erste Dichtung 61. Weiters zeigt Fig. 3a, dass sich die Oberkante 14 des äußeren Behälters 1 ebenfalls gegen die erste Dichtung 61 verspreizt. Somit ist sichergestellt, dass die Aufbewahrungseinheit 10 luft- und gegebenenfalls wasserdicht verschlossen ist, wenn der äußere Verschlussdeckel 6 auf den äußeren Behälter 1 aufgesetzt ist.

Fig. 3b und 3c zeigen Draufsichten auf die erste Ausführungsform der Erfindung, wobei Fig. 3b eine Draufsicht in Richtung des Bodens 12 des äußeren Behälters 1 und Fig. 3c eine Draufsicht in Richtung des äußeren Verschlussdeckels 6 zeigt. Dabei ist ersichtlich, dass im ersten Ausführungsbeispiel der äußere Behälter 1 und der äußere Verschlussdeckel 6 einen quadratischen Querschnitt aufweisen. Somit umfasst die Außenwand 11 des äußeren Behälters vier gleich ausgestaltete Wandflächen 11a.

Die erste Vertiefung 13 weist ebenfalls einen quadratischen Querschnitt auf und ist zentrisch mittig im Boden 12 angeordnet. Im ersten Ausführungsbeispiel weisen die zweite Dichtung 61a, das Abdeckelement 62 und ein auf dem äußeren Behälter 1 aufsitzender Anteil des Abdeckrahmens 4 ebenfalls einen quadratischen Querschnitt auf.

Alternativ können der äußere Behälter 1, der äußere Verschlussdeckel 6, die zweite Dichtung 61a, das Abdeckelement 62 und ein auf dem äußeren Behälter 1 aufsitzender Anteil des Abdeckrahmens 4 einen rechteckigen, kreisförmigen oder elliptischen Querschnitt aufweisen.

Der innere Behälter 2 und der innere Verschlussdeckel 5 sowie ein auf dem inneren Behälter 2 aufsitzender Anteil des Abdeckrahmens 4 weisen im ersten Ausführungsbeispiel der Erfindung einen quadratischen Querschnitt auf.

Alternativ können der innere Behälter 2, der innere Verschlussdeckel 5 und der auf dem inneren Behälter 2 aufsitzende Anteil des Abdeckrahmens 4 einen rechteckigen, kreisförmigen oder elliptischen Querschnitt aufweisen.

Im ersten Ausführungsbeispiel sind der äußere Behälter 1 und der innere Behälter 2 quaderförmig ausgebildet. Alternativ können der äußere Behälter 1 und der innere Behälter 2 auch zylindrisch ausgebildet sein. Somit ist beispielsweise möglich, dass ein zylindrischer innerer Behälter 2 mit einem kreisförmigen Querschnitt in einem quaderförmigen äußeren Behälter 1 mit einem rechteckigen Querschnitt untergebracht ist.

Fig. 4a zeigt eine Detailaufnahme im Bereich einer Ausnehmung 23 in einer Seitenfläche 26 des inneren Behälters 2 im Querschnitt. Dabei ist ersichtlich, dass ein perforiertes Schichtelement 24 an der Seitenfläche 26 fixiert ist und die Ausnehmung 23 in der Seitenfläche 26 verschließt.

Eine erfindungsgemäße Aufbewahrungseinheit 10 kann zur Lagerung bzw. Aufbewahrung vielfältiger feuchtegradsensibler Produkte verwendet werden. Die Aufbewahrungseinheit 10 eignet sich nicht nur zur Lagerung von Nahrungs- bzw. Lebensmitteln, wie beispielsweise Kräutern, Gewürzen, Tees, Kaviar, Trüffel, Spezial-Käse, Wurst- und Fleischwaren, sondern auch zur Aufbewahrung von Genussmitteln wie Tabak oder Körperpflegeprodukten wie z. B. Badesalz oder Kosmetika.

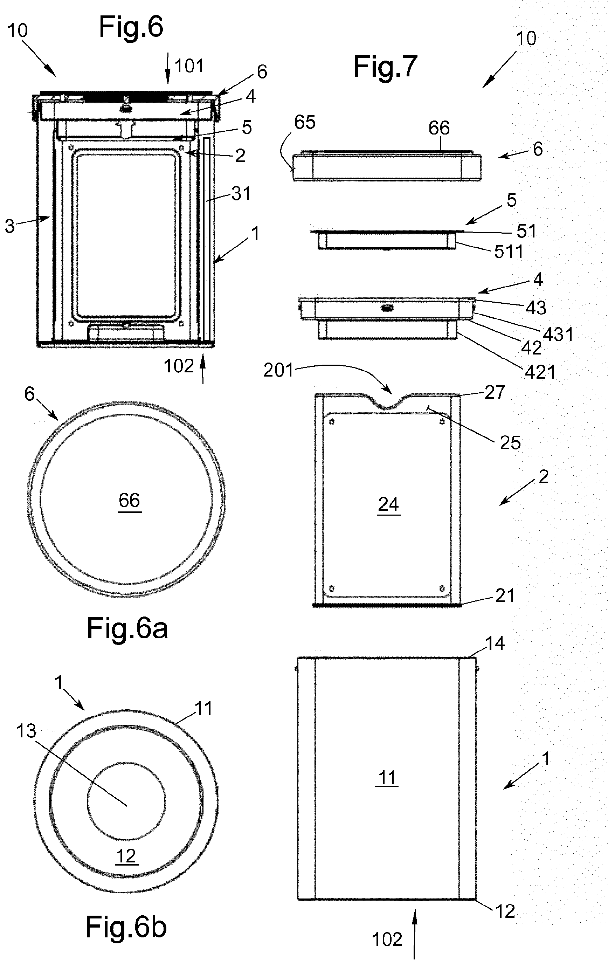

Die Fig. 6 bis Fig. 8 zeigen ein zweites Ausführungsbeispiel der Erfindung. Die oben angeführte Beschreibung ist auch für das zweite Ausführungsbeispiel analog heranzuziehen.

Im zweiten Ausführungsbeispiel in Fig. 6, Fig. 6a, Fig. 6b, Fig. 7 und Fig. 8 weist die erfindungsgemäße Aufbewahrungseinheit 10 einen äußeren Behälter 1 und einen inneren Behälter 2 auf, die beide eine kreiszylindrische Gestalt im Querschnitt haben. Der innere Behälter 2 weist wie im zuvor gezeigten ersten Ausführungsbeispiel einen Innenraum 7 zur Aufnahme eines feuchtegradsensiblen Produkts auf. Über eine von einer Abschlusskante 27 begrenzte Einfüllöffnung 201 ist das Produkt dabei in den inneren Behälter 2 einbringbar (siehe Fig. 7).

Die Aufbewahrungseinheit 10 umfasst weiters einen Abdeckrahmen 4, sowie einen inneren Verschlussdeckel 5 und einen äußeren Verschlussdeckel 6 (siehe Fig. 6a), die beide einen kreisförmigen Querschnitt besitzen, und gegebenenfalls eine Dichtung 61 und ein Deckelement 62. Die auf dem äußeren Behälter 1 bzw. dem inneren Behälter 2 aufsitzenden Anteile des Abdeckrahmens 4 weisen jeweils einen kreisförmigen Querschnitt auf (siehe Fig. 6). Durch dieses Zusammenwirken des Abdeckrahmens 4 mit dem äußeren Behälter 1 bzw. dem inneren Behälter 2 ist auch bei der zweiten Ausführungsform der Erfindung gewährleistet, dass kein Tee in den Zwischenraum 3 gelangen kann.

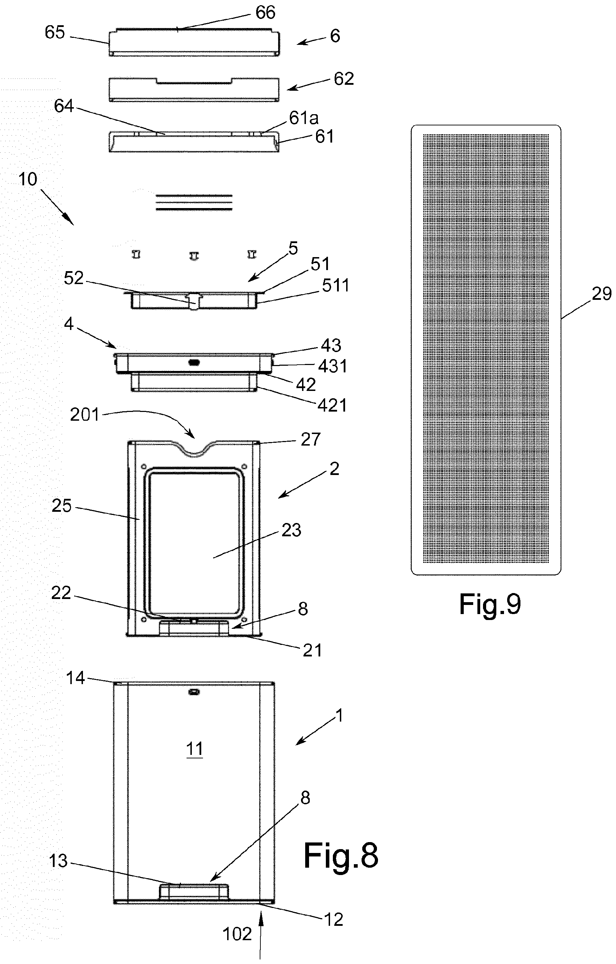

Im Boden 12 des äußeren Behälters 1 (siehe Fig. 6b) und im Boden 21 des inneren Behälters 2 sind, wie zuvor bereits für das erste Ausführungsbeispiel beschrieben, Verbindungsmittel 8 zur Herstellung einer Wirkverbindung zwischen den Behältern 1, 2 ausgebildet. Im zweiten Ausführungsbeispiel sind diese als erste Vertiefung 13 bzw. zweite Vertiefung 22 mit kreiszylindrischer Gestalt ausgebildet, die miteinander korrespondieren (siehe Fig. 6 und Fig 8).

Zwischen dem äußeren Behälter 1 und dem inneren Behälter 2 ist ein Zwischenraum 3 ausgebildet, in den ein Feuchteregulationsmittel 31, z.B. in Form von Beuteln, eingelegt werden kann (siehe Fig. 6).

Der innere Behälter 2 kann wie beim ersten Ausführungsbeispiel als eine Rahmenkonstruktion ausgebildet sein, in der Ausnehmungen 23 vorgesehen sind, an denen jeweils perforierte Schichtelemente 24 angeordnet sind. Die Schichtelemente 24 können beispielsweise aus einer Stahllegierung hergestellt sein und weisen eine große Anzahl an Luftaustauschöffnungen 28 auf, die zum Atmosphärenaustausch zwischen dem Innenraum 7 und dem Zwischenraum 3 dienen.

Alternativ dazu kann bei allen Ausführungsformen der Erfindung die Wandfläche 25 des inneren Behälters 2 aus einem perforierten Wandelement 29 gebildet sein, das eine Vielzahl von Luftaustauschöffnungen 28 aufweist. Ein derartiges durchgehendes perforiertes Wandelement 29 kann beispielsweise aus einer Stahllegierung bestehen.

Ein derartiges perforiertes Wandelement 29 ist beispielhaft in einem ausgerollten Zustand in Fig. 9 dargestellt. Das perforierte Wandelement 29 ist bei einem Einsatz als Wandfläche 25 des inneren Behälters 2 des zweiten Ausführungsbeispiels der Aufbewahrungseinheit 10 zusammengerollt, sodass es einen kreiszylindrischen Innenraum 7 umschließt. Der Boden 21 des inneren Behälters 2 ist in diesem Fall mit dem perforierten Wandelement 29 verbunden und kann, wie zuvor beschrieben, ein Verbindungsmittel 8 zur Herstellung einer Wirkverbindung mit dem äußeren Behälter 1 aufweisen. Das perforierte Wandelement 29 weist dabei eine Abschlusskante 27 an seinem dem Boden 21 gegenüberliegenden Ende auf, die die Einfüllöffnung 201 begrenzt.

Diese Ausgestaltung des inneren Behälters 2 ist besonders vorteilhaft, da ein besonders effizienter Atmosphärenaustausch zwischen dem Innenraum 7 des inneren Behälters 2 und dem Zwischenraum 3 möglich ist, sodass eine einheitliche Binnenatmosphäre mit einem bestimmten Feuchtegrad besonders einfach einstellbar ist.

## Patentansprüche

1. Aufbewahrungseinheit (10) zur Lagerung von feuchtegradsensiblen Produkten, insbesondere Tee, umfassend
- einen äußeren Behälter (1) mit einer geschlossenen Außenwand (11), einer Oberseite (101), an der der äußere Behälter (1) offen ist und eine Oberkante (14) aufweist, und einer Unterseite (102), an der ein geschlossener Boden (12) angeordnet ist,
- einen inneren Behälter (2) mit einem Innenraum (7) zur Aufnahme des feuchtegradsensiblen Produkts, einer Wandfläche (25) mit einer Anzahl von Luftaustauschöffnungen (28), einer Einfüllöffnung (201), einer die Einfüllöffnung (201) begrenzenden Abschlusskante (27) und einem geschlossenen Boden (21),
wobei der innere Behälter (2) reversibel in den äußeren Behälter (1) einsetzbar ist, wobei die Einfüllöffnung (201) des inneren Behälters (2) nach oben zur Oberseite (101) des äußeren Behälters (1) gerichtet ist und zwischen dem äußeren Behälter (1) und dem inneren Behälter (2) ein Zwischenraum (3) zum Einlegen eines Feuchteregulationsmittels (31) ausgebildet ist,
- einen reversibel abnehmbaren, auf den äußeren Behälter (1) und den inneren Behälter (2) aufsetzbaren und entlang der Oberkante (14) und der Abschlusskante (27) umfänglich umlaufenden Abdeckrahmen (4),
wobei der Abdeckrahmen (4) zur Abdeckung der zwischen dem äußeren Behälter (1) und dem inneren Behälter (2) ausgebildeten Öffnung (32) des Zwischenraums (3) ausgebildet ist und
wobei im Abdeckrahmen (4) eine Rahmenöffnung (41) für den Zugang in den Innenraum (7) vorgesehen ist, **gekennzeichnet durch**
- einen reversibel abnehmbaren, auf den Abdeckrahmen (4) aufsetzbaren, inneren Verschlussdeckel (5) zum Verschließen der Rahmenöffnung (41) und
- einen abnehmbaren, vom inneren Verschlussdeckel (5) getrennten, äußeren Verschlussdeckel (6) zum luftdichten Verschließen des äußeren Behälters (1) bzw. der Oberseite (101) des äußeren Behälters (1).

2. Aufbewahrungseinheit (10) nach Anspruch 1, **dadurch gekennzeichnet, dass** der Abdeckrahmen (4) eine erste in den inneren Behälter (2) eingreifende Stufe (421) aufweist, wodurch eine erste umlaufende Auflagefläche (42) ausgebildet ist, die auf die Abschlusskante (27) des inneren Behälters (2) auflegbar ist und auf den der innere Verschlussdeckel (5) aufsetzbar ist.

3. Aufbewahrungseinheit (10) nach Anspruch 1 oder 2, **dadurch gekennzeichnet, dass** der Abdeckrahmen (4) eine zweite in den äußeren Behälter (2) eingreifende Stufe (431) aufweist, wodurch eine zweite umlaufende Auflagefläche (43) ausgebildet ist, die auf die Oberkante (14) des äußeren Behälters (1) auflegbar ist.

4. Aufbewahrungseinheit (10) nach Anspruch 2 oder 3, **dadurch gekennzeichnet, dass** der innere Verschlussdeckel (5) eine an die erste Auflagefläche (42) angepasste Absenkung (511) aufweist, sodass ein nach außen gerichteter, umfänglich umlaufender Vorsprung (51) ausgebildet ist.

5. Aufbewahrungseinheit (10) nach einem der vorangehenden Ansprüche, **dadurch gekennzeichnet, dass** der äußere Verschlussdeckel (6) eine die Oberseite (101) des äußeren Behälters (1) verschließende Verschlussfläche (66) und eine umfänglich verlaufende Umbiegungsfläche (65) aufweist,
wobei der äußere Verschlussdeckel (6) auf den äußeren Behälter (1) derart aufsetzbar ist, dass der obere Randbereich der Außenwand (11) des äußeren Behälters (1) von der Umbiegungsfläche (65) umschlossen ist, und
wobei vorzugsweise die Verschlussfläche (66) und die Umbiegungsfläche (65) eben ausgebildet sind.

6. Aufbewahrungseinheit (10) nach Anspruch 5, **dadurch gekennzeichnet, dass** der äußere Verschlussdeckel (6) an der dem Innenraum (7) zugewandten Seite der Umbiegungsfläche (65) eine umfänglich an den Abdeckrahmen (4) und den äußeren Behälter (1) anlegbare erste Dichtung (61) aufweist, und eine zweite Dichtung (61a) an der dem Innenraum (7) zugewandten Seite der Verschlussfläche (66) angeordnet ist,
- wobei insbesondere vorgesehen ist, dass an einer dem Innenraum (7) zugewandten Seite der zweiten Dichtung (61a) ein die zweite Dichtung (61a) zumindest abschnittsweise abdeckendes Deckelement (62) angeordnet ist,
- wobei vorzugsweise vorgesehen ist, dass das Deckelement (62) eine Vertiefung (63) aufweist und dass die zweite Dichtung (61a) eine damit korrespondierende Dichtungsausnehmung (64) aufweist, wobei die Grundfläche der Dichtungsausnehmung (64) der Grundfläche der Vertiefung (63) entspricht, sodass das Deckelement (62) im Bereich der Dichtungsausnehmung (64) mit dem äußeren Verschlussdeckel (6) berührend anordenbar ist,
- wobei insbesondere vorgesehen ist, **dadurch gekennzeichnet, dass** am Deckelement (62) ein umfänglich umlaufender Bördelrand (67) vorgesehen ist, wobei der Bördelrand (67) bei Aufsetzen des Deckelements (62) auf die an der Verschlussfläche (66) angeordnete zweite Dichtung (61a) zur Fixierung des Deckelements (62) gegen die erste Dichtung (61) und die Umbiegungsfläche (65) des äußeren Verschlussdeckels (6) verspreizbar ist.

7. Aufbewahrungseinheit (10) nach Anspruch 6, **dadurch gekennzeichnet, dass** der äußere Behälter (1) und der äußere Verschlussdeckel (6) und die zweite Dichtung (61a) und das Abdeckelement (62) und ein auf dem äußeren Behälter (1) aufsitzender Anteil des Abdeckrahmens (4) einen rechteckigen oder quadratischen oder kreisförmigen oder elliptischen Querschnitt aufweisen,
und/oder
**dadurch gekennzeichnet, dass** der innere Behälter (2) und/oder der innere Verschlussdeckel (5) und/oder ein auf dem inneren Behälter (2) aufsitzender Anteil des Abdeckrahmens (4) einen rechteckigen oder quadratischen oder kreisförmigen oder elliptischen Querschnitt aufweisen,
und/oder
**dadurch gekennzeichnet, dass** der äußere Behälter (1) und/oder der innere Behälter (2) quaderförmig oder zylindrisch ausgebildet sind,
und/oder
**dadurch gekennzeichnet, dass** die Luftaustauschöffnungen (28) den Innenraum (7) und den Zwischenraum (3) verbinden, sodass im Innenraum (7) und im Zwischenraum (3) eine einheitliche Binnenatmosphäre mit einem bestimmten Feuchtegrad einstellbar ist.

8. Aufbewahrungseinheit (10) nach einem der vorangehenden Ansprüche, **dadurch gekennzeichnet, dass** der innere Behälter (2) zumindest eine Ausnehmung (23) mit einem die Ausnehmung (23) bedeckenden perforierten Schichtelement (24), in dem die Luftaustauschöffnungen (28) angeordnet sind, aufweist,
wobei insbesondere vorgesehen ist, dass der innere Behälter (2) durch eine Rahmenkonstruktion gebildet ist, wobei der innere Behälter (2) an jeder seiner Seitenflächen (26) Ausnehmungen (23) aufweist, an denen perforierte Schichtelemente (24) angeordnet sind,
wobei vorzugsweise vorgesehen ist, dass die perforierten Schichtelemente (24) aus einer Stahllegierung bestehen.

9. Aufbewahrungseinheit (10) nach einem der vorangehenden Ansprüche, **dadurch gekennzeichnet, dass** der äußere Behälter (1) und/oder der äußere Verschlussdeckel (6) und/oder gegebenenfalls die Wandfläche (25) des inneren Behälters (2) und/oder der innere Verschlussdeckel (5) aus einem Weißblech oder Zinnblech bestehen.

10. Aufbewahrungseinheit (10) nach einem der vorangehenden Ansprüche, **dadurch gekennzeichnet, dass** im Boden (12) des äußeren Behälters (1) und/oder im Boden (21) des inneren Behälters (2), insbesondere mechanische, Verbindungsmittel (8) zur Herstellung einer reversibel lösbaren Wirkverbindung zwischen dem äußeren Behälter (1) und dem inneren Behälter (2) vorgesehen sind,
wobei vorzugsweise die Verbindungsmittel (8) zentrisch mittig angeordnet sind.

11. Aufbewahrungseinheit (10) nach Anspruch 10, **dadurch gekennzeichnet, dass** im Boden (12) des äußeren Behälters (1) eine erste Vertiefung (13) vorgesehen ist und im Boden (21) des inneren Behälters (2) eine mit der ersten Vertiefung (13) korrespondierende zweite Vertiefung (22) vorgesehen ist, sodass eine mechanische Wirkverbindung herstellbar ist,

12. Aufbewahrungseinheit (10) nach Anspruch 11, **dadurch gekennzeichnet, dass** die erste Vertiefung (13) und die zweite Vertiefung (22) sphärisch, ellipsoidal oder quaderförmig ausgestaltet sind,
wobei insbesondere eine erste Hinterschneidung (131) in der ersten Vertiefung (13) und eine damit korrespondierende zweite Hinterschneidung (221) in der zweiten Vertiefung (22) vorgesehen sind, sodass der innere Behälter (2) durch Aufsetzen auf den äußeren Behälter (1) im äußeren Behälter (1) arretierbar ist.

13. Aufbewahrungseinheit (10) nach Anspruch 11 oder 12, **dadurch gekennzeichnet, dass** die Vertiefungswandflächen der ersten Vertiefung (13) und der zweiten Vertiefung (22) parallel zur den Außenwandflächen (11a) des äußeren Behälters (1) ausgerichtet sind.

14. Aufbewahrungseinheit (10) nach einem der vorangehenden Ansprüche, **dadurch gekennzeichnet, dass** an einer vom Innenraum (7) abgewandten Seite des inneren Verschlussdeckels (5) ein Griff (52) vorgesehen ist,
und/oder
**dadurch gekennzeichnet, dass**
- der äußere Behälter (1) und der innere Behälter (2) kreiszylindrisch ausgebildet sind,
- der äußere Verschlussdeckel (6) und ein auf dem äußeren Behälter (1) aufsitzender Anteil des Abdeckrahmens (4) einen kreisförmigen Querschnitt aufweisen und
- der innere Verschlussdeckel (5) und ein auf dem inneren Behälter (2) aufsitzender Anteil des Abdeckrahmens (4) einen kreisförmigen Querschnitt aufweisen.

15. Aufbewahrungseinheit (10) nach einem der vorangehenden Ansprüche, **dadurch gekennzeichnet, dass** die Wandfläche (25) des inneren Behälters (2) aus einem perforierten Wandelement (29) gebildet ist, wobei das perforierte Wandelement (29) eine Vielzahl von Luftaustauschöffnungen (28) aufweist.

## Claims

1. Storage unit (10) for storing products sensitive to the degree of humidity, particularly tea, comprising:
- an outer container (1) having a closed outer wall (11), an upper side (101) on which the outer container (1) is open and has an upper edge (14), and a lower side (102) on which a closed bottom (12) is arranged,
- an inner container (2) having an inner space (7) for receiving the product sensitive to the degree of humidity, a wall surface (25) with a number of air-exchange openings (28), a filling opening (201), a closing edge (27) defining the filling opening (201), and a closed bottom (21),
wherein the inner container (2) can be reversibly inserted into the outer container (1), wherein the filling opening (201) of the inner container (2) is upwardly oriented towards the upper side (101) of the outer container (1), and an intermediate space (3) for the insertion of a humidity-regulating means (31) is formed between the outer container (1) and the inner container (2),
- a reversibly removable covering frame (4) that can be placed on the outer container (1) and the inner container (2) and extends all the way around the upper edge (14) and the closing edge (27),
wherein the covering frame (4) is designed to cover the opening (32) of the intermediate space (3) formed between the outer container (1) and the inner container (2), and
wherein a frame opening (41) for accessing the inner space (7) is provided in the covering frame (4), **characterised by**
- a reversibly removable inner sealing cover (5) for sealing the frame opening (41), which inner sealing cover can be placed on the covering frame (4) and
- a removable outer sealing cover (6), which is separate from the inner sealing cover (5), for sealing the outer container (1) or the upper side (101) of the outer container (1) in an airtight manner.

2. Storage unit (10) according to claim 1, **characterised in that** the covering frame (4) has a first tier (421) which engages in the inner container (2), whereby a first completely surrounding contact surface (42) is formed which can be mounted on the closing edge (27) of the inner container (2) and on which the inner sealing cover (5) can be placed.

3. Storage unit (10) according to claim 1 or 2, **characterised in that** the covering frame (4) has a second tier (431) engaging in the outer container (2), whereby a second surrounding contact surface (43) is formed which can be mounted on the upper edge (14) of the outer container (1).

4. Storage unit (10) according to claim 2 or 3, **characterised in that** the inner sealing cover (5) has an indentation (511) adapted to the first contact surface (42), such that an outward-facing, completely surrounding protrusion (51) is formed.

5. Storage unit (10) according to any of the preceding claims, **characterised in that** the outer sealing cover (6) has a sealing surface (66) that seals the upper side (101) of the outer container (1) and a completely surrounding bending surface (65),
wherein the outer sealing cover (6) can be placed on the outer container (1) in such a way that the upper edge area of the outer wall (11) of the outer container (1) is surrounded by the bending surface (65), and
wherein the sealing surface (66) and the bending surface (65) are preferably level.

6. Storage unit (10) according to claim 5, **characterised in that** the outer sealing cover (6), on the side of the surrounding surface (65) facing the inner space (7), has a first seal (61) that can be placed in a surrounding manner on the covering frame (4) and the outer container (1), and a second seal (61a) is arranged on the side of the sealing surface (66) facing the inner space (7),
- wherein it is preferably provided that a covering element (62) that at least partially covers the second seal (61a) is arranged on a side of the second seal (61a) facing the inner space (7),
- wherein it is preferably provided that the covering element (62) has a recess (63) and the second seal (61a) has a sealing cut-out (64) corresponding thereto, wherein the base surface of the sealing cut-out (64) corresponds to the base surface of the recess (63), such that the covering element (62), in the region of the sealing cut-out (64), can be arranged contiguously with the outer sealing cover (6),
- wherein it is preferably provided that a completely surrounding flanged edge (67) is provided on the covering element (62), wherein the flanged edge (67) is able, when the covering element (62) is placed onto the second seal (61a) arranged on the sealing surface (66), to expand to brace the covering element (62) against the first seal (61) and the bending surface (65) of the outer sealing cover (6).

7. Storage unit (10) according to claim 6, **characterised in that** the outer container (1) and the outer sealing cover (6) and the second seal (61a) and the covering element (62) and a portion of the covering frame (4) mounted on the outer container (1) have a rectilinear or square or circular or elliptical cross-section,
and/or
**characterised in that** the inner container (2) and/or the inner sealing cover (5) and/or a portion of the covering frame (4) mounted on the inner container (2) have a rectilinear or square or circular or elliptical cross-section
and/or
**characterised in that** the outer container (1) and/or the inner container (2) are rectangular or cylindrical,
and/or
**characterised in that** the air-exchange openings (28) connect the inner space (7) and the intermediate space (3), such that a uniform internal atmosphere with a particular degree of humidity can be set in the inner space (7) and in the intermediate space (3).

8. Storage unit (10) according to any of the preceding claims, **characterised in that** the inner container (2) has at least one cut-out (23) with a perforated layer element (24) which covers the cut-out (23) and in which the air-exchange openings (28) are arranged,
wherein it is preferably provided that the inner container (2) is formed by a frame construction, wherein the inner container (2) has, on each of its side surfaces (26), cutouts (23) on which perforated layer elements (24) are arranged,
wherein it is preferably provided that the perforated layer elements (24) consist of a steel alloy.

9. Storage unit (10) according to any of the preceding claims, **characterised in that** the outer container (1) and/or the outer sealing cover (6) and/or optionally the wall surface (25) of the inner container (2) and/or the inner sealing cover (5) consist of a tinplate or tin sheet.

10. Storage unit (10) according to any of the preceding claims, **characterised in that**, in particular mechanical, connecting means (8) are provided in the bottom (12) of the outer container (1) and/or in the bottom (21) of the inner container (2) to produce a reversibly releasable operative connection between the outer container (1) and the inner container (2),
wherein the connecting means (8) are preferably arranged centrally.

11. Storage unit (10) according to claim 10, **characterised in that** a first recess (13) is provided in the bottom (12) of the outer container (1) and a second recess (22) corresponding to the first recess (13) is provided in the bottom (21) of the inner container (2), such that a mechanical operative connection can be established.

12. Storage unit (10) according to claim 11, **characterised in that** the first recess (13) and the second recess (22) are of spherical, ellipsoidal or rectangular shape,
wherein in particular a first undercut (131) is provided in the first recess (13) and a second undercut (221) corresponding thereto is provided in the second recess (22), such that the inner container (2) can be locked in the outer container (1) by being placed on the outer container (1).

13. Storage unit (10) according to claim 11 or 12, **characterised in that** the recess wall surfaces of the first recess (13) and of the second recess (22) are aligned parallel to the outer wall surfaces (11a) of the outer container (1).

14. Storage unit (10) according to any of the preceding claims, **characterised in that** a handle (52) is provided on a side of the inner sealing cover (5) facing away from the inner space (7),
and/or
**characterised in that**
- the outer container (1) and the inner container (2) are cylindrical,
- the outer sealing cover (6) and a portion of the covering frame (4) mounted on the outer container (1) have a circular cross-section, and
- the inner sealing cover (5) and a portion of the covering frame (4) mounted on the inner container (2) have a circular cross-section.

15. Storage unit (10) according to any of the preceding claims, **characterised in that** the wall surface (25) of the inner container (2) is formed by a perforated wall element (29), wherein the perforated wall element (29) has a plurality of air-exchange openings (28).

## Revendications

1. Unité d'entreposage (10) permettant de stocker des produits sensibles à la teneur en humidité en particulier le thé, comprenant
- un récipient externe (1) doté d'une paroi externe (11) fermée, d'une face supérieure (101), sur laquelle le récipient externe (1) est ouvert et présente un bord supérieur (14), et une face inférieure (102), sur laquelle est disposé un fond (12) fermé,
- un récipient interne (2) doté d'un espace intérieur (7) destiné à recevoir le produit sensible à la teneur en humidité, une surface de paroi (25) dotée d'un certain nombre d'ouvertures d'échange d'air (28), une ouverture de remplissage (201), un bord d'extrémité (27) définissant l'ouverture de remplissage (201) et un fond (21) fermé,
dans laquelle le récipient interne (2) peut être inséré de manière réversible dans le récipient externe (1),
dans laquelle l'ouverture de remplissage (201) du récipient interne (2) est orientée vers le haut vers la face supérieure (101) du récipient externe (1) et entre le récipient externe (1) et le récipient interne (2) est réalisé un espace intérieur (3) pour insérer un moyen de régulation de l'humidité (31),
- un cadre de couvercle (4), amovible de manière réversible, pouvant être placé sur le récipient externe (1) et le récipient interne (2) et circonférentiellement périphérique le long du bord supérieur (14) et du bord d'extrémité (27),
dans laquelle le cadre de couvercle (4) est réalisé pour couvrir l'ouverture (32) de l'espace intermédiaire (3) réalisée entre le récipient externe (1) et le récipient interne (2) et
dans laquelle dans le cadre de couvercle (4) est prévue une ouverture de cadre (41) destinée à permettre l'accès à l'espace intérieur (7), **caractérisée par**
- un couvercle de fermeture interne (5), amovible de manière réversible, pouvant être placé sur le cadre de couvercle (4) destiné à fermer l'ouverture de cadre (41) et
- un couvercle de fermeture externe (6), amovible, séparé du couvercle de fermeture interne (5), destiné à la fermeture étanche à l'air du récipient externe (1) ou de la face supérieure (101) du récipient externe (1).

2. Unité d'entreposage (10) selon la revendication 1, **caractérisée en ce que** le cadre de couvercle (4) présente un premier niveau (421) venant en prise dans le récipient interne (2), selon laquelle une première surface d'appui (42) circonférentielle est réalisée, qui peut être posée sur le bord d'extrémité (27) du récipient interne (2) et sur lequel le couvercle de fermeture (5) peut être placé.

3. Unité d'entreposage (10) selon la revendication 1 ou 2, **caractérisée en ce que** le cadre de couvercle (4) présente un second niveau (431) venant en prise dans le récipient externe (1), selon laquelle une seconde surface d'appui (43) circonférentielle est réalisée, qui peut être posée sur le bord supérieur (14) du récipient externe (1).

4. Unité d'entreposage (10) selon la revendication 2 ou 3, **caractérisée en ce que** le couvercle de fermeture interne (5) présente un abaissement (511) adapté à la première surface d'appui (42), de sorte qu'une saillie (51) circonférentielle périphérique, orientée vers l'extérieur est réalisée.

5. Unité d'entreposage (10) selon l'une quelconque des revendications précédentes, **caractérisée en ce que** le couvercle de fermeture externe (6) présente une surface de fermeture (66) fermant la face supérieure (101) du récipient externe (1) et une surface de courbure (65) s'étendant circonférentiellement,
dans laquelle le couvercle de fermeture externe (6) peut être placé sur le récipient externe (1) de telle manière que la zone de bord supérieur de la paroi externe (11) du récipient externe (1) est entourée par la surface de courbure (65), et
dans laquelle de préférence la surface de fermeture (66) et la surface de courbure (65) sont réalisées de manière plane.

6. Unité d'entreposage (10) selon la revendication 5, **caractérisée en ce que** le couvercle de fermeture externe (6) présente sur le côté de la surface de courbure (65) orienté vers l'espace intérieur (7) un premier joint d'étanchéité pouvant être appliqué circonférentiellement sur le cadre de couvercle (4) et le récipient externe (1), et un second joint d'étanchéité (61a) est disposé sur le côté de la surface de fermeture (66) orienté vers l'espace intérieur (7),
- dans laquelle est prévu en particulier que sur un côté du second joint d'étanchéité (61a) orienté vers l'espace intérieur (7) est disposé un élément de couvercle (62) couvrant au moins partiellement le second joint d'étanchéité (61a),
- dans laquelle est prévu de préférence que l'élément de couvercle (62) présente un renfoncement (63) et que le second joint d'étanchéité (61a) présente un évidement de joint d'étanchéité (64) correspondant, dans lequel la surface de base de l'évidement de joint d'étanchéité (62) correspond à la surface de base du renfoncement (63), de sorte que l'élément de couvercle (62) peut être disposé dans la zone de l'évidement de joint d'étanchéité (64) de manière contiguë au couvercle de fermeture externe (6),
- dans laquelle est prévu en particulier, **caractérisée en ce qu'**un bord rabattu (67) circonférentiel périphérique est prévu sur l'élément de couvercle (62), dans lequel le bord rabattu (67) peut être écarté lors du placement de l'élément de couvercle (62) sur le second joint d'étanchéité (61a) disposé sur la surface de fermeture (66) pour fixer l'élément de couvercle (62) au premier joint d'étanchéité (61) et la surface de courbure (65) du couvercle de fermeture externe (6).

7. Unité d'entreposage (10) selon la revendication 6, **caractérisée en ce que** le récipient externe (1) et le couvercle de fermeture externe (6) et le second joint d'étanchéité (61a) et l'élément de couvercle (62) et une portion du cadre de couvercle (4) reposant sur le récipient externe (1) présentent une section transversale rectangulaire ou carrée ou circulaire ou elliptique,
et/ou
**caractérisée en ce que** le récipient interne (2) et/ou le couvercle de fermeture interne (5) et/ou une portion du cadre de couvercle (4) reposant sur le récipient interne (2) présentent une section transversale rectangulaire ou carrée ou circulaire ou elliptique,
et/ou
**caractérisée en ce que** le récipient externe (1) et/ou le récipient interne (2) est(sont) en forme de parallélépipède ou cylindrique,
et/ou
**caractérisée en ce que** les ouvertures d'échange d'air (28) relient l'espace intérieur (7) à l'espace intermédiaire (3), de sorte que dans l'espace intérieur (7) et dans l'espace intermédiaire (3) une atmosphère intérieure uniforme est réglable avec une teneur en humidité définie.

8. Unité d'entreposage (10) selon l'une quelconque des revendications précédentes, **caractérisée en ce que** le récipient interne (2) présente au moins un évidement (23) avec un élément de couche perforé (24) couvrant l'évidement (23), dans lequel sont disposés des ouvertures d'échange d'air (28),
dans laquelle est prévu en particulier que le récipient interne (2) soit formé par une construction de cadre, dans lequel le récipient interne (2) présente sur chacune de ses surfaces latérales (26) des évidements (23), sur lesquels sont disposés des éléments de couche perforés (24),
dans laquelle est prévu de préférence que les éléments de couche perforés (24) consistent en un alliage d'acier.

9. Unité d'entreposage (10) selon l'une quelconque des revendications précédentes, **caractérisée en ce que** le récipient externe (1) et/ou le couvercle de fermeture externe (6) et/ou le cas échéant la surface de paroi (25) du récipient interne (2) et/ou du couvercle de fermeture interne (5) consistent en du fer blanc ou une plaque d'étain.

10. Unité d'entreposage (10) selon l'une quelconque des revendications précédentes, **caractérisée en ce que** sur le fond (12) du récipient externe (1) et/ou sur le fond (21) du récipient interne (2), sont prévus des moyens de liaison (8), en particulier mécaniques, pour la production d'une liaison active amovible de manière réversible entre le récipient externe (1) et le récipient interne (2),
dans laquelle les moyens de liaison (8) sont disposés de préférence de manière centrée.

11. Unité d'entreposage (10) selon la revendication 10, **caractérisée en ce que** sur le fond (12) du récipient externe (1) est prévu un premier renfoncement (13) et sur le fond (21) du récipient interne (2) est prévu un second renfoncement (22) correspondant au premier renfoncement (13), de sorte qu'une liaison active mécanique peut être produite.

12. Unité d'entreposage (10) selon la revendication 11, **caractérisée en ce que** le premier renfoncement (13) et le second renfoncement (12) sont configurés de forme sphérique, ellipsoïdale ou parallélépipédique,
dans laquelle sont prévues en particulier une première contre-dépouille (131) dans le premier renfoncement (13) et une seconde contre-dépouille (221) correspondante dans le second renfoncement (22), de sorte que le récipient interne (2) peut être bloqué dans le récipient externe (1) en le plaçant sur le récipient externe (1).

13. Unité d'entreposage (10) selon la revendication 11 ou 12, **caractérisée en ce que** les surfaces de parois de renfoncement du premier renfoncement (13) et du second renfoncement sont orientées parallèlement aux surfaces de parois externes (11a) du récipient externe (1).

14. Unité d'entreposage (10) selon l'une quelconque des revendications précédentes, **caractérisée en ce qu'**une poignée (52) est prévue sur un côté opposé de l'espace intérieur (7) du couvercle de fermeture interne (5),
et/ou
**caractérisée en ce que**
- le récipient externe (1) et le récipient interne (2) sont réalisés de manière cylindrique circulaire,
- le couvercle de fermeture externe (6) et une portion du cadre de couvercle (4) reposant sur le récipient externe (1) présentent une section transversale circulaire et
- le couvercle de fermeture interne (5) et une portion du cadre de couvercle (4) reposant sur le récipient interne (2) présentent une section transversale circulaire.

15. Unité d'entreposage (10) selon l'une quelconque des revendications précédentes, **caractérisée en ce que** les surfaces de paroi (25) du récipient interne (2) sont formées d'un élément de paroi perforé (29), dans laquelle l'élément de paroi perforé (29) présente une pluralité d'ouvertures d'échange d'air (28).
